# EUROPÄISCHE PATENTSCHRIFT

(11) **EP 3 885 659 B1**
(45) Veröffentlichungstag und Bekanntmachung des Hinweises auf die Patenterteilung: **25.06.2025**
(21) Anmeldenummer: 21164815.9
(22) Anmeldetag: 25.03.2021
(51) Int. Cl.: F24F 5/00, F24F 3/14

(54) **VORRICHTUNG UND VERFAHREN ZUR KÜHLUNG EINES RAUMES**
METHOD AND DEVICE FOR COOLING A ROOM
DISPOSITIF ET PROCÉDÉ DE REFROIDISSEMENT D'UN ESPACE

(30) Priorität: 26.03.2020 DE 102020203908
(43) Veröffentlichungstag der Anmeldung: 29.09.2021
(73) Patentinhaber: Fraunhofer-Gesellschaft zur Förderung der angewandten Forschung e.V., 80686 München (DE)
(72) Erfinder: Künzel, Hartwig, 83626 Valley (DE); Schmidt, Simon, 83626 Valley (DE)
(74) Vertreter: Friese Goeden Patentanwälte PartGmbB

(56) Entgegenhaltungen:
- DE-A1- 102009 009 582
- US-A- 4 171 620
- US-A- 5 890 372
- US-A1- 2003 033 821
- US-A1- 2018 163 982

## Beschreibung

Die Erfindung betrifft eine Vorrichtung zur Kühlung eines Raumes mit zumindest einer Verdunstungseinrichtung, welche dazu eingerichtet ist, eine Flüssigkeit zu verdunsten und diese in den Raum abzugeben. Weiterhin betrifft die Erfindung ein Verfahren zur Kühlung eines Raumes mit zumindest einer Verdunstungseinrichtung, mit welcher eine Flüssigkeit verdunstet und in den Raum abgegeben wird.

Aus der Praxis ist bekannt, dass die Verdunstung von Wasser einen spürbaren Kühleffekt besitzt. Wird Wasser an einer Oberfläche in einem Raum eines Gebäudes verdunstet, so wird die zur Verdunstung erforderliche latente Wärme der Raumluft entzogen, welche sich dadurch abkühlt. Darüber hinaus kühlt sich die zur Verdunstung verwendete Oberfläche ab, sodass im Raum befindliche Personen oder Abwärme erzeugende Geräte Strahlungswärme an die Oberfläche abgeben können. Der Mittelwert aus Luft- und Strahlungstemperatur sinkt dadurch ab, sodass sich die Komfortbedingungen im Sommer bzw. in heißen Klimaten verbessern können.

Dieses Vorgehen weist den Nachteil auf, dass durch die Kühlung die Luftfeuchte im Raum ansteigt. Dies führt dazu, dass die thermische Behaglichkeit wieder sinkt, da sich das Dampfdruckgefälle zwischen Hautoberfläche und Raumluft verringert. Hierdurch kann die Thermoregulation des Menschen nachteilig beeinflusst werden.

Darüber hinaus hat eine hohe Luftfeuchte den Nachteil, dass sich die hygienischen Verhältnisse im Raum verschlechtern, beispielsweise durch Schimmelbildung an Oberflächen, Milbenwachstum in Polstermöbeln und Teppichen und/oder Entstehung von Modergerüchen.

Weiterhin ist aus dem Stand der Technik bekannt, durch Kompressionskältemaschinen, welche außerhalb des Gebäudes angeordnet sind, einem Wärmeträgermedium Wärme zu entziehen. Das solchermaßen abgekühlte Wärmeträgermedium kann einem im Raum befindlichen Wärmetauscher zugeführt werden und dort der Raumluft Wärme entziehen. Solche Klimatisierungsanlagen weisen jedoch einen hohen Energieverbrauch auf.

US 2003/033821 A1 offenbart eine Vorrichtung zur Kühlung eines Raumes und ein Verfahren zur Kühlung eines Raumes nach der Präambel der Ansprüche 1 und 8. Weitere Vorrichtungen zur Kühlung eines Raumes sind aus DE 10 2009 009582 A1, US 2018/163982 A1, US 4 171 620 A und US 5 890 372 A bekannt.

Ausgehend vom Stand der Technik liegt der Erfindung somit die Aufgabe zugrunde, eine Vorrichtung und ein Verfahren zur Kühlung eines Raumes anzugeben, welche energieeffizient arbeiten und nachteilige Auswirkungen auf das Raumklima vermeiden.

Die Aufgabe wird erfindungsgemäß durch eine Vorrichtung gemäß Anspruch 1 und ein Verfahren nach Anspruch 8 gelöst. Vorteilhafte Weiterbildungen der Erfindung finden sich in den Unteransprüchen.

Erfindungsgemäß wird eine Vorrichtung zur Kühlung eines Raumes vorgeschlagen. Der Raum kann zumindest ein Raum eines Gebäudes sein und beispielsweise als Wohnraum, Lagerraum, Besprechungsraum oder Büroraum oder Versammlungsstätte Verwendung finden. Das Gebäude kann durch Außenwände von der Umgebung getrennt sein, welche den Luft- und Wärmeaustausch zwischen dem Raum und der Umgebung begrenzen. In anderen Ausführungsformen der Erfindung kann der Raum Teil eines Eisenbahnwagens oder eines anderen Fahrzeuges oder eines Schiffes sein und in gleicher Weise durch Außenwände von der Umgebung getrennt sein.

Erfindungsgemäß wird vorgeschlagen, innerhalb des Raumes zumindest eine Verdunstungseinrichtung anzuordnen, welche dazu eingerichtet ist, eine Flüssigkeit zu verdunsten und diese in den Raum abzugeben. Die Flüssigkeit enthält bevorzugt, aber nicht zwingend, Wasser. In einigen Ausführungsformen der Erfindung besteht die Flüssigkeit überwiegend oder vollständig aus Wasser. Die Verdunstungseinrichtung ist dazu eingerichtet, das Wasser vom flüssigen in den gasförmigen Zustand zu überführen. Die hierzu erforderliche latente Wärme wird zumindest teilweise der Raumluft entnommen, welche sich dadurch abkühlt.

Weiterhin enthält die erfindungsgemäße Vorrichtung zumindest eine Lüftungseinrichtung, welcher ein Frischluftstrom zuführbar ist und welche dazu eingerichtet ist, diesen Frischluftstrom als Zuluftstrom in den Raum abzugeben. Hierzu enthält die Lüftungseinrichtung zumindest eine Fördereinrichtung, beispielsweise einen Radial- oder Axial- oder Walzenlüfter mit einem elektrisch angetriebenen Lüfterrad. Die Lüftungseinrichtung kann fallweise Einrichtungen zur Wärmerückgewinnung enthalten, sodass Wärmeverluste bzw. Wärmegewinne durch die Lüftung reduziert sind. Darüber hinaus kann die Lüftungseinrichtung weitere Bauteile enthalten, wie beispielsweise Luftführungsrohre oder -kanäle oder Filter.

Die Lüftungseinrichtung kann eine zentrale Lüftungseinrichtung sein, welche alle oder zumindest eine Mehrzahl von Räumen des Gebäudes mit Frischluft versorgt. In anderen Ausführungsformen der Erfindung kann die Lüftungseinrichtung eine raumselektive Lüftung sein, beispielsweise ein in der Außenwand des Gebäudes angeordneter Pendellüfter, welcher abwechselnd verbrauchte Raumluft entnimmt und in den Außenbereich abführt und Frischluft aus dem Außenraum des Gebäudes ansaugt und als Zuluftstrom dem Raum zuführt. In einigen Ausführungsformen der Erfindung kann die Lüftungseinrichtung eine Umluftlüftung sein, welche einen Frischluftstrom aus der Raumluft entnimmt, diesen aufbereitet und und als Zuluft dem Raum wieder zuführt.

Erfindungsgemäß enthält die Lüftungseinrichtung weiterhin eine Trocknungseinrichtung, welche dazu eingerichtet ist, dem Frischluftstrom Feuchte zu entziehen und diesen entfeuchteten Frischluftstrom als Zuluftstrom in den Raum abzugeben.

Erfindungsgemäß wird nun vorgeschlagen, dass bei Betrieb der Vorrichtung der Zuluftstrom und die Flüssigkeit erst innerhalb des Raumes miteinander in Kontakt kommen. Anders als bei lufttechnischen Anlagen, welche eine Befeuchtung unmittelbar in der Zuluftleitung vornehmen, vermeidet die erfindungsgemäße Vorrichtung somit die Kontamination der Zuluftleitungen mit Schimmelsporen bzw. Biofilmen. Selbst wenn die Lüftungseinrichtung als zentrale Lüftungseinrichtung für ein gesamtes Gebäude ausgeführt ist, so werden in den Zuluftleitungen dieser Lüftungseinrichtung ausschließlich trockene Luftströme geführt, welche keine negativen Auswirkungen auf die Sauberkeit der Zuluftleitungen haben. Anders als bei bekannten lufttechnischen Anlagen wird somit die Luftkonditionierung nicht außerhalb des Raumes in der lufttechnischen Anlage vorgenommen und sodann diese konditionierte Luft in den Raum eingeleitet. Erfindungsgemäß wird hingegen vorgeschlagen, trockene Zuluft und verdunstete Flüssigkeit zur Kühlung und Befeuchtung erst innerhalb des Raumes zusammenzubringen. Neben der verbesserten Hygiene eignet sich die erfindungsgemäße Vorrichtung insbesondere auch zur Altbaumodernisierung, da aufwändige Installationsarbeiten entfallen können. Durch die Trockung des Zuluftstroms kann die Verdunstungsleistung der Verdunstungseinrichtung erhöht sein, sodass sich eine größere Kühlleistung ergibt, welche eine niedrigere Raumtemperatur bzw. höhere Wärmelast im Raum ermöglicht.

In einigen Ausführungsformen der Erfindung wird der Zuluftstrom noch weiter aufbereitet, ehe er dem Raum zugeführt wird. Die Aufbereitung des Zuluftstroms kann ausgewählt seinaus einer Filterung und/oder einer Erwärmung und/oder Kühlung oder einer anderweitigen Behandlung. Fallweise kann mehr als eine Lüftungseinrichtung vorhanden sein oder aber eine Lüftungseinrichtung, welche mehrere der genannten Funktionen gleichzeitig oder sequenziell oder alternativ ausführt.

In einigen Ausführungsformen der Erfindung kann durch die Trocknungseinrichtung die relative Feuchte des Zuluftstromes um etwa 2 % bis etwa 30 % oder um etwa 5 % bis etwa 20 % niedriger sein als die relative Feuchte des Frischluftstromes. In einigen Ausführungsformen der Erfindung kann durch die Trocknungseinrichtung die relative Feuchte des Zuluftstromes so gesteuert oder geregelt werden, dass die relative Feuchte im Raum konstant bleibt, d.h. die relative Feuchte des Zuluftstromes muss niedriger sein als die relative Feuchte im Raum. In einigen Ausführungsformen der Erfindung bedeutet eine konstante relative Feuchte im Raum eine Feuchte, welche zeitlich um nicht mehr als ± 10% oder nicht mehr als ± 5% oder nicht mehr als ± 2% oder nicht mehr als ± 1% schwankt.

In einigen Ausführungsformen der Erfindung kann die Trocknungseinrichtung ausgewählt sein aus einem Kondensationstrockner und/oder einem Adsorptionstrockner. Adsorptionstrockner weisen dabei den Vorteil einer höheren Trocknungsleistung auf, sodass entweder ein größerer Luftwechsel im Raum ermöglicht wird oder die Luft stärker entfeuchtet werden kann, sodass die Verdunstungsleistung der Verdunstungseinrichtung und damit die Wärmeabfuhr weiter ansteigen kann. Kondensationstrockner weisen den Vorteil auf, dass diese mit geringerem Primärenergieeinsatz betrieben werden können. Darüber hinaus kann das aus dem Frischluftstrom abgeschiedene Wasser über einen Sammeltank oder eine Abwasserleitung aus dem Raum entfernt werden, ohne dass in jedem Fall eine aufwendige Abluftleitung installiert werden muss.

In einigen Ausführungsformen der Erfindung kann die Lüftungseinrichtung dazu eingerichtet sein, den Frischluftstrom einer Raumluft und/oder einer Außenluft zu entnehmen. Dementsprechend wird entweder die Raumluft entfeuchtet und dem Raum als trockene Zuluft wieder zugeführt. In anderen Ausführungsformen der Erfindung kann der Frischluftstrom von außerhalb des Gebäudes dem Raum zugeführt werden. In trockenen Klimaten der gemäßigten Breiten oder der Subtropen kann hierdurch eine zusätzliche Entfeuchtung durch eine Trocknungseinrichtung auch entfallen. Fallweise kann eine Wärmerückgewinnung der aus dem Raum abgeführten Raumluft vorteilhaft sein, um die Außenluft vorzukühlen und Energieverluste zu minimieren. Darüber hinaus kann eine solche Wärme- oder Enthalpierückgewinnung dazu führen, dass die relative Feuchte des Zuluftstromes gegenüber dem Frischluftstrom abnimmt.

In einigen Ausführungsformen der Erfindung kann die Verdunstungseinrichtung eine Verdunstungsfläche aufweisen, auf welcher die Flüssigkeit aufbringbar ist bzw. bei Betrieb der Verdunstungseinrichtung aufgebracht wird. Da die Verdunstung der Raumluft Wärme entzieht, führt eine solche Ausführungsform der Verdunstungseinrichtung dazu, dass die Verdunstungsfläche zusätzlich abkühlt. Hierdurch kann der menschliche Körper oder eine andere Wärmequelle im Raum zusätzlich Strahlungswärme an die Verdunstungsfläche abgeben und so zusätzlich entwärmt werden.

In einigen Ausführungsformen der Erfindung kann die Verdunstungseinrichtung eine Verdunstungsfläche aufweisen, welche ausgewählt ist aus einem porösen Material und/oder einem Glas und/oder einer Keramik und/oder einem Naturstein und/oder einem lebenden pflanzlichen Material. Das pflanzliche Material kann ausgewählt sein aus einem oder mehreren Moosen oder gängigen Zimmerpflanzen bzw. Grünpflanzen. Jede Ausführungsform der Verdunstungsfläche weist spezifische Vorteile auf, sodass der Fachmann in Abhängigkeit des konkreten Anwendungsfalles eine geeignete Verdunstungsfläche oder auch mehrere verschiedene Verdunstungsflächen auswählen kann. So weist ein poröses Material, beispielsweise ein Bimsstein, ein Metallschaum, ein Blähton, oder ein ähnliches, offenporiges Material eine größere Oberfläche auf, welche die Verdunstungsleistung und damit die Kühlleistung steigern kann. Glattflächige Oberflächen wie beispielsweise Glas oder Keramik und manche Natursteine können besonders pflegeleicht sein, sodass die Kontamination der Raumluft durch Schimmelsporen oder Biofilme reduziert sein oder sogar ganz verhindert werden kann.

Die Verwendung von Naturstein, Glas oder Keramik eröffnet darüber hinaus besondere Gestaltungsmöglichkeiten, welche eine gefällige Integration der erfindungsgemäßen Vorrichtung in verschiedene Räume ermöglicht. Die Verwendung von Moosen oder anderen Pflanzen vereint eine hohe Verdunstungsleistung durch große Oberflächen, eine ansprechende ästhetische Gestaltung und eine Selbstreinigung durch ständige Erneuerung des Pflanzenmaterials bei Wachstum der betreffenden Pflanze. Pflanzen können insbesondere auch auf porösen Verdunstungsflächen wachsen und so die Vorteile großer Oberflächen mit den Vorteilen des pflanzlichen Materials vereinen.

Die Verdunstungsfläche kann in einigen Ausführungsformen waagrecht sein und beispielsweise Teil eines Zimmerbrunnens oder eines Teiches sein. In anderen Ausführungsformen der Erfindung kann die Verdunstungsfläche geneigt sein, sodass die zu verdunstende Flüssigkeit schwerkraftgetrieben über die Verdunstungsfläche läuft. Hierdurch wird ein ständiger Austausch sichergestellt, welcher die hygienischen Verhältnisse an der Verdunstungseinrichtung verbessern kann.

In einigen Ausführungsformen der Erfindung kann der Zuluftstrom über die Verdunstungsfläche der Verdunstungseinrichtung geführt werden. Hierdurch kann der Verdunstungsprozess beschleunigt werden, sodass sich die Kühlleistung erhöht. Demselben Zweck dienen Ausführungsformen, bei welchen der Zuluftstrom durch die Verdunstungsfläche der Verdunstungseinrichtung hindurchgeführt wird und somit intensiven Kontakt zur Flüssigkeit bzw. einem Flüssigkeitsfilm erhält.

In einigen Ausführungsformen der Erfindung enthält die Vorrichtung zumindest einen Feuchtesensor, mit welchem der durch die Lüftungseinrichtung bereitgestellte Zuluftstrom steuer- oder regelbar ist. Somit kann die Luftfeuchte im Raum im einen gewünschten Bereich gehalten werden, ohne dass nachteilige Auswirkungen auf den Raum bzw. die Benutzer auftreten. Solche, die Nutzerakzeptanz beeinträchtigenden Probleme können einerseits dadurch entstehen, dass der trockene Zuluftstrom zu stark ist und die Luftfeuchtigkeit im Raum zu stark reduziert wird. Andererseits können Probleme jedoch auch dadurch entstehen, dass der Zuluftstrom zu gering ist und die Luftfeuchtigkeit durch die Kühlung zu stark ansteigt.

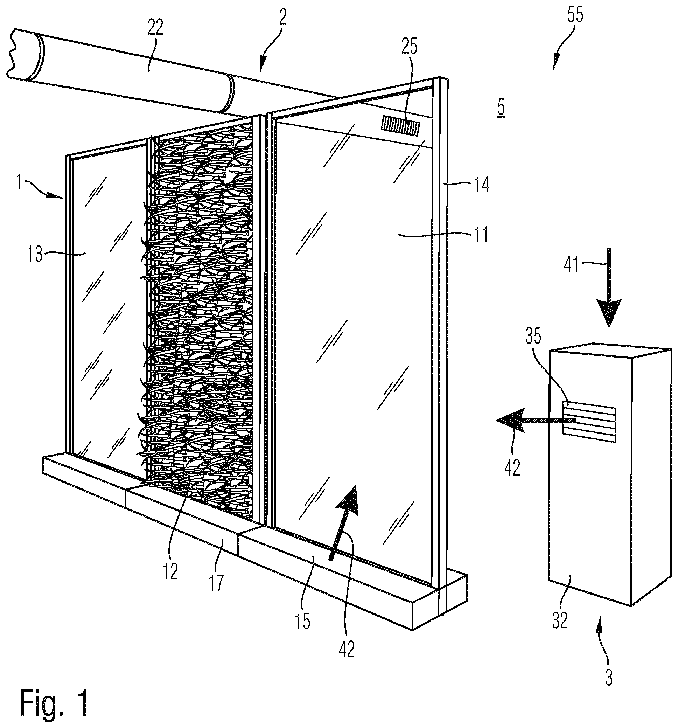

In einigen Ausführungsformen der Erfindung enthält die Verdunstungseinrichtung keine Kühleinrichtung für die zu verdunstende Flüssigkeit. Die zu verdunstende Flüssigkeit kann somit eine Temperatur aufweisen, welche von der Raumtemperatur um etwa -10 K bis etwa +10 K oder um etwa -5 K bis etwa +5 K oder um etwa -10 K bis etwa +1 K oder um etwa -8 K bis etwa 0 K oder um etwa -2 K bis etwa +2 K abweicht. Sofern die zu verdampfende Flüssigkeit Wasser ist bzw. Wasser enthält, kann dieses somit beispielsweise unmittelbar einem öffentlichen Leitungsnetz entnommen oder in einem Kreislauf zirkuliert werden, ohne dass eine weitere Aufbereitung bzw. Kühlung erforderlich ist. Das wärmere Wasser kann einerseits eine höhere Verdunstungsrate aufweisen. Andererseits wird zusätzlicher Energieeinsatz für die Kühlung der in den Raum eingebrachten Flüssigkeit vermieden. Nachfolgend soll die Erfindung anhand von Ausführungsbeispielen und Figuren näher erläutert werden. Dabei zeigt:
- .Figur 1: ein erstes Ausführungsbeispiel einer erfindungsgemäßen Vorrichtung zur Kühlung eines Raumes.

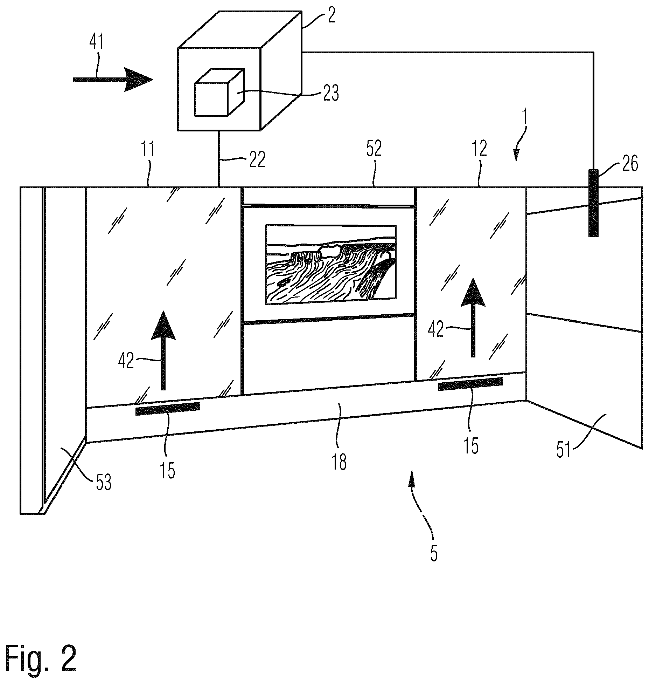

- Figur 2: zeigt ein zweites Ausführungsbeispiel einer erfindungsgemäßen Vorrichtung zur Kühlung eines Raumes.

Figur 1 zeigt einen Raum 5, welcher durch nicht dargestellte Innen- und/oder Außenwände begrenzt wird. Der Raum kann beispielsweise Teil eines Bürogebäudes oder eines Wohngebäudes, einer Versammlungsstätte, einer Sportanlage oder eines anderen Gebäudes sein. Der Raum 5 ist dementsprechend zur Benutzung durch Menschen oder Tiere oder als Lagerraum vorgesehen.

Bei heißer Witterung, beispielsweise im mitteleuropäischen Sommer oder, in anderen Klimaten, auch ganzjährig, steigt die Temperatur im Raum 5 an, so dass das Wohlbefinden der sich im Raum aufhaltenden Personen beeinträchtigt werden kann. Es besteht somit eine Notwendigkeit, den Raum 5 zu kühlen. Hierzu dient die erfindungsgemäße Vorrichtung 55.

Wie aus Figur 1 ersichtlich ist, enthält die Vorrichtung 55 zumindest eine Verdunstungseinrichtung 1 und zumindest eine Lüftungseinrichtung 2 oder 3. Im dargestellten Ausführungsbeispiel sind zwei Lüftungseinrichtungen vorhanden. Die Erfindung lehrt jedoch lediglich das Vorhandensein zumindest einer Lüftungseinrichtung 2 oder 3, wobei eine weitere Lüftungseinrichtung optional ist.

Die Verdunstungseinrichtung 1 weist im dargestellten Ausführungsbeispiel drei Verdunstungsflächen 11, 12 und 13 auf. Die Verdunstungsflächen 11 und 13 sind dabei aus einem Glas oder Kunststoff in transparenter oder transluzenter Ausführung gefertigt. Demgegenüber enthält die Verdunstungsfläche 12 ein Pflanzsubstrat, welches durch Moose oder Blattpflanzen begrünt ist.

Sämtliche Verdunstungsflächen stehen in etwa senkrecht auf dem Boden des Raumes 5. Die zu verdunstende Flüssigkeit wird somit oben auf die Verdunstungsflächen aufgebracht und läuft an den Verdunstungsflächen 11, 12 und 13 herab, bis zu einem Sammelbehälter, welcher im Sockel 17 der Verdunstungseinrichtung 1 angeordnet ist. Von dort kann die Flüssigkeit entweder über einen Ablauf abgeführt oder mittels einer Umwälzpumpe erneut auf die Verdunstungsflächen aufgebracht werden. Im Falle der begrünten Verdunstungsfläche 12 kann die Flüssigkeit entweder in ein poröses Pflanzsubstrat der Verdunstungsfläche eingebracht und von dort über die Blattoberflächen der Pflanzen an den Raum 5 abgegeben werden. Alternativ oder zusätzlich kann die Flüssigkeit auch unmittelbar auf die Blattoberflächen der Pflanzen aufgebracht und von dort verdunstet werden.

Die Erfindung lehrt nicht die Verwendung von genau drei Verdunstungsflächen 11, 12 und 13 als Lösungsprinzip. In anderen Ausführungsformen der Erfindung kann die Anzahl der Verdunstungsflächen im Raum 5 größer oder geringer sein und beispielsweise zwischen 1 und etwa 50 oder zwischen etwa 2 und etwa 10 betragen, wobei eine einzelne Verdunstungsfläche einen Flächeninhalt von etwa 1 m² bis etwa 10 m² oder von etwa 1 m² bis etwa 5 m² aufweisen kann.

Im ersten Ausführungsbeispiel gemäß Figur 1 ist die Verdunstungseinrichtung 1 als Stellwand ausgeführt, welche frei im Raum 5 positioniert werden kann. Die Stellwand kann somit beispielsweise als Raumteiler eingesetzt werden oder auch als Akustikpaneel. Hierzu können die Verdunstungsflächen 11, 12 und 13 in einem optionalen Rahmen 14 gehaltert werden, welcher seinerseits mit dem Sockel 17 der Verdunstungsfläche verbunden ist und die Verdunstungseinrichtung 1 in der gewünschten Position hält. Die Verdunstungsflächen 11, 12 und 13 können beidseitig mit der zu Verdunstenden Flüssigkeit benetzt werden.

Durch die Verdunstung der Flüssigkeit auf den Verdunstungsflächen 11, 12 und 13 wird einerseits dem Raum unmittelbar Wärmeenergie entzogen, sodass die Lufttemperatur im Raum sinkt. Darüber hinaus kühlt auch die Verdunstungsfläche selbst ab, sodass diese als Wärmesenke für Infrarotstrahlung dienen kann, welche von Personen oder technischen Geräten im Raum 5 ausgeht. Hierdurch kann der Mittelwert aus Luft- und Strahlungstemperatur weiter sinken, sodass die Wirkung der erfindungsgemäßen Vorrichtung verbessert sein kann.

Um nun ein unzulässiges Ansteigen der Luftfeuchtigkeit im Raum 5 zu verhindern, enthält die Vorrichtung 55 weiterhin zumindest eine Lüftungseinrichtung 2 oder 3. Dabei ist die Lüftungseinrichtung 2 als Zentrallüftungseinrichtung ausgestaltet, welche einen Zuluftstrom 42 in mehrere oder alle Räume eines Gebäudes leiten kann. Hierzu enthält die Lüftungseinrichtung 2 eine zentrale Einrichtung, welche zumindest eine Fördereinrichtung, zumindest eine zentrale Frischluftzufuhr und zumindest eine eine Trocknungseinrichtung sowie weitere optionale Elemente enthält, beispielsweise Filteranlagen, Heizregister und/oder Wärmerückgewinnungseinrichtungen.

Die Lüftungseinrichtung 2 kann Frischluft entweder aus dem Außenraum des Gebäudes oder aber aus zumindest einem Raum 5 absaugen, diese trocknen und fallweise erwärmen und/oder filtern und über zumindest eine Zuluftleitung 22 und zumindet einen Luftaustritt 25 in den Raum 5 einleiten. Die Zufuhr trockener Luft sowie die optionale Abfuhr feuchter Luft aus dem Raum 5 führt dazu, dass die durch den Betrieb der Verdunstungseinrichtung 1 ansteigende Luftfeuchte wieder in einen angenehmen Bereich absinkt. Da die Zuluftleitung 22 selbst keine befeuchtete, sondern unbehandelte oder allenfalls getrocknete Zuluft transportiert, ist die Entstehung von Schimmel oder sonstigen, gesundheitsschädlichen Biofilmen im Inneren des Zuluftleitung 22 reduziert oder unmöglich. Die trockene Luft aus der Lüftungseinrichtung 2 trifft erst innerhalb des Raumes 5 auf die Feuchte aus der Verdunstungseinrichtung 1, sodass keine Stelle der gesamten Lüftungseinrichtung mit einer unzulässig großen Luftfeuchte in Kontakt kommt.

Alternativ oder zusätzlich zur zentralen Lüftungseinrichtung 2 kann auch zumindest eine dezentrale Lüftungseinrichtung 3 vorgesehen sein. Die dezentrale Lüftungseinrichtung 3 kann beispielsweise einen Kondensations- oder Adsorptionstrockner enthalten. In anderen Ausführungsformen der Erfindung kann die Lüftungseinrichtung 3 alternativ oder zusätzlich auch eine Einrichtung zur Wärmerückgewinnung, ein Heizregister und/oder eine Fördereinrichtungen enthalten, beispielsweise einen Lüfter. Sämtliche Komponenten der Lüftungseinrichtung 3 sind in zumindest einem Gehäuse 32 zusammengefasst, welches in einigen Ausführungsformen der Erfindung frei im Raum 5 positionierbar sein kann. In einigen Ausführungsformen der Erfindung können die Bestandteile der Lüftungseinrichtung 3 auch in mehreren Komponenten relisiert werden, welche an unterschiedlichen Stellen innerhalb oder auch außerhalb des Raumes angeordnet sein können. So kann beispielsweise eine Kälteanlage vorteilhaft in an sich bekannter Weise auch außerhalb des Gebäudes angeordnet und durch Leitungen mit den übrigen Komponenten der Lüftungseinrichtung 3 verbunden werden.

Die dezentrale Lüftungseinrichtung 3 ist dazu vorgesehen, einen Frischluftstrom 41 anzusaugen. Dieser kann beispielsweise unmittelbar dem Raum 5 entnommen werden. Alternativ oder zusätzlich kann der Frischluftstrom 41 auch durch die Gebäudehülle aus dem Außenraum zugeführt werden.

Der Frischluftstrom 41 wird in der Lüftungseinrichtung 3 getrocknet und optional gefiltert und/oder beheizt und sodann über den Luftaustritt 35 als Zuluftstrom 42 dem Raum 5 zugeführt. Auch dieser, trockenere Zuluftstrom 42 mit geringerer relativer Feuchte als der Frischluftstrom 41 führt somit wiederum zur Reduktion der relativen Luftfeuchte im Raum 5, sodass die durch den Betrieb der Verdunstungseinrichtung 1 ansteigende Feuchte kompensiert werden kann.

In einigen Ausführungsformen der Erfindung kann die Verdunstungseinrichtung 1 selbst ein Ausströmelement 15 aufweisen, welches einen trockenen Zuluftstrom 42 unmittelbar auf oder in die Verdunstungsfläche 11, 12 oder 13 leitet. Hierdurch kann die Verdunstungsleistung erhöht sein, sodass ein größerer Temperaturunterschied zwischen dem Inneren des Raumes 5 und dem Außenraum erreichbar ist bzw. bei gleicher Temperatur im Raum 5 eine größere Wärmelast eingebracht werden kann.

Figur 2 zeigt eine zweite Ausführungsform der Erfindung. Gleiche Bestandteile der Erfindung sind mit gleichen Bezugszeichen versehen, sodass sich die nachfolgende Beschreibung auf die wesentlichen Unterschiede beschränkt.

Auch Figur 2 zeigt einen Raum 5. Darüber hinaus sind drei Begrenzungsflächen bzw. Wände 51, 52 und 53 dargestellt. Im dargestellten Beispiel ist die Außenwand 51 beispielsweise als Leicht- oder Massivbauwand hergestellt, beispielsweise aus Beton, Mauerwerk oder Holzständerkonstruktion.

Auch die Innenwände 52 und 53 können als Massivbau- oder Leichtbauwand hergestellt sein.

Anders als im vorstehend beschriebenen ersten Ausführungsbeispiel ist die Verdunstungseinrichtung 1 nicht als Stellwand frei im Raum positioniert, sondern in der Innenwand 52 integriert. Hierzu weist die Innenwand 52 Teilflächen auf, welche als Verdunstungsflächen 11 und 12 ausgebildet sind. Auf diese Verdunstungsflächen wird die zu verdunstende Flüssigkeit, beispielsweise Wasser mit oder ohne Zusätze, im Deckenbereich aufgebracht, sodass dieses als dünner Film über die Verdunstungsflächen läuft und von einer Ablaufrinne im unteren Bereich aufgenommen wird.

Im Bodenbereich befindet sich ein Sockel 18, welcher einerseits Ablaufrinnen, Leitungen und/oder optionale Umwälzpumpen für die Flüssigkeit aufnehmen kann. Darüber hinaus sind im Sockel 18 Zuluftleitungen 22 vorhanden, welche in Ausströmelementen 15 münden. Von dort wird ein von der Lüftungseinrichtung 2 zentral bereitgestellter Zuluftstrom 42 auf die Verdunstungsflächen 11 und 12 geleitet. Hierdurch wird einerseits die Luftfeuchte im Raum 5 wieder reduziert, um ein behagliches Raumklima zu ermöglichen. Darüber hinaus wird die Verdunstungsleistung durch Zufuhr eines getrockneten Zuluftstroms 42 erhöht, um eine verbesserte Kühlleistung bereitzustellen.

Der Zuluftstrom 42 wird von einer Lüftungseinrichtung 2 bereitgestellt, welche einen Frischluftstrom 41 ansaugt, diesen in einer optionalen Trocknungseinrichtung 23 so weit entfeuchtet, dass die relative Luftfeuchte des Zuluftstroms 42 um etwa 2 % bis etwa 30 % oder um etwa 5 % bis etwa 20 % niedriger ist als die relative Feuchte des Frischluftstroms 41. Die so vorkonditionierte Zuluft wird über die Zuluftleitung 22 zu den Ausströmelementen 15 geleitet.

Um die Luftfeuchte im Raum 5 in einem angenehmen Bereich zu halten, kann ein optionaler Feuchtesensor 26 die relative Luftfeuchte im Raum 5 erfassen und diesen Wert an die Lüftungseinrichtung 2 weitergeben. In der Lüftungseinrichtung 2 kann somit die Menge des Zuluftstroms 42 und/oder die relative Feuchte des Zuluftstroms 42 geregelt oder gesteuert werden, um die Luftfeuchte im Raum 5 in einem vorgebbaren Bereich zu halten.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Vorrichtung (55) zur Kühlung eines Raumes (5) mit zumindest einer Verdunstungseinrichtung (1), welche dazu eingerichtet ist, eine Flüssigkeit zu Verdunsten und diese in den Raum (5) abzugeben,
wobei die Vorrichtung weiterhin zumindest eine Lüftungseinrichtung (2, 3) mit einer Trocknungseinrichtung (23) enthält, welche dazu eingerichtet ist, einem Frischluftstrom (41) Feuchte zu entziehen und diesen entfeuchteten Frischluftstrom (41) als Zuluftstrom (42) in den Raum (5) abzugeben, **dadurch gekennzeichnet, dass** bei Betrieb der Vorrichtung (55) der Zuluftstrom (42) und die Flüssigkeit erst innerhalb des Raumes (5) miteinander in Kontakt kommen.

2. Vorrichtung nach Anspruch 1, **dadurch gekennzeichnet, dass** die Lüftungseinrichtung (2, 3) dazu eingerichtet ist, den Frischluftstrom (41) einer Raumluft und/oder einer Außenluft zu entnehmen.

3. Vorrichtung nach Anspruch 2, **dadurch gekennzeichnet, dass** die Trocknungseinrichtung (23) ausgewählt ist aus einem Kondensationstrockner und/oder einem Adsorptionstrockner.

4. Vorrichtung nach einem der Ansprüche 1 bis 3, **dadurch gekennzeichnet, dass** die Verdunstungseinrichtung (1) eine Verdunstungsfläche (11, 12, 13) aufweist, auf welche die Flüssigkeit aufbringbar ist und/oder
dass die Verdunstungseinrichtung (1) eine Verdunstungsfläche (11, 12, 13) aufweist, welche ausgewählt ist aus einem porösen Material und/oder einem Glas und/oder einer Keramik und/oder einem Naturstein und/oder einem lebenden pflanzlichen Material.

5. Vorrichtung nach Anspruch 4, **dadurch gekennzeichnet, dass** der Zuluftstrom (42) über die Verdunstungsfläche (11, 12, 13) der Verdunstungseinrichtung (1) führbar ist und/oder dass der Zuluftstrom (42) durch die Verdunstungsfläche (11, 12, 13) der Verdunstungseinrichtung (1) hindurch führbar ist.

6. Vorrichtung nach einem der Ansprüche 1 bis 5, **dadurch gekennzeichnet, dass** die Verdunstungseinrichtung (1) keine Kühleinrichtung für die zu verdunstende Flüssigkeit enthält.

7. Vorrichtung nach einem der Ansprüche 1 bis 6, weiterhin enthaltend zumindest einen Feuchtesensor (26), mit welchem der durch die Lüftungseinrichtung (2, 3) bereitgestellte Zuluftstrom (42) steuer- oder regelbar ist.

8. Verfahren zur Kühlung eines Raumes (5), bei welchem mit zumindest einer Verdunstungseinrichtung (1) eine Flüssigkeit verdunstet und in den Raum (5) abgegeben wird, wobei mit zumindest einer Lüftungseinrichtung (2, 3), welche eine Trocknungseinrichtung (23) enthält, einem Frischluftstrom (41) Feuchte entzogen wird und dieser entfeuchtete Frischluftstrom (41) als Zuluftstrom (42) in den Raum (5) abgegeben wird, **dadurch gekennzeichnet, dass** der Zuluftstrom (42) und die Flüssigkeit erst innerhalb des Raumes (5) miteinander in Kontakt kommen.

9. Verfahren nach Anspruch 8, **dadurch gekennzeichnet, dass** der Frischluftstrom (41) einer Raumluft und/oder einer Außenluft entnommen wird und/oder
dass der Frischluftstrom (41) zusätzlich erwärmt wird.

10. Verfahren nach einem der Ansprüche 8 oder 9, **dadurch gekennzeichnet, dass** die relative Feuchte des Zuluftstromes (42) um etwa 2% bis etwa 30% oder um etwa 5% bis etwa 20% niedriger ist als die relative Feuchte des Frischluftstroms (41).

11. Verfahren nach einem der Ansprüche 8 bis 10, **dadurch gekennzeichnet, dass** die Flüssigkeit auf eine Verdunstungsfläche (11, 12) aufgebracht wird und/oder
dass die Flüssigkeit auf eine Moosfläche (13) und/oder auf Pflanzen aufgebracht wird.

12. Verfahren nach einem der Ansprüche 8 bis 11, **dadurch gekennzeichnet, dass** der Zuluftstrom (42) über die Verdunstungsfläche (11, 12, 13) der Verdunstungseinrichtung (1) geführt wird und/oder
dass der Zuluftstrom durch die Verdunstungsfläche (11, 12, 13) der Verdunstungseinrichtung (1) hindurch geführt wird.

13. Verfahren nach einem der Ansprüche 8 bis 12, **dadurch gekennzeichnet, dass** die Flüssigkeit bei einer Temperatur verdunstet wird, welche von der Raumtemperatur um etwa -10 K bis etwa +10 K oder um etwa -5 K bis etwa +5 K oder um etwa -10 K bis etwa +1 K oder um etwa -8 K bis etwa 0 K oder um etwa -2 K bis etwa +2 K abweicht.

14. Verfahren nach einem der Ansprüche 8 bis 13, **dadurch gekennzeichnet, dass** der dem Raum (5) zugeführte Zuluftstrom (42) in Abhängigkeit der Messwerte eines Feuchtesensors (26) gesteuert- oder geregelt wird.

## Claims

1. Device (55) for cooling a room (5), comprising at least one evaporation apparatus (1) which is designed to evaporate a liquid and release it into the room (5),
the device further containing at least one ventilation apparatus (2, 3) with a drying apparatus (23) which is designed to extract moisture from a fresh air flow (41) and to release this dehumidified fresh air flow (41) into the room (5) as a supply air flow (42), **characterized in that**, during the operation of the device (55), the supply air flow (42) and the liquid only come into contact with one another inside the room (5).

2. Device according to claim 1, **characterized in that** the ventilation apparatus (2, 3) is designed to extract the fresh air flow (41) from room air and/or outside air.

3. Device according to claim 2, **characterized in that** the drying apparatus (23) is selected from a condensation dryer and/or an adsorption dryer.

4. Device according to any one of claims 1 to 3, **characterized in that** the evaporation apparatus (1) has an evaporation surface (11, 12, 13) to which the liquid can be applied and/or
**in that** the evaporation apparatus (1) has an evaporation surface (11, 12, 13) which is selected from a porous material and/or a glass and/or a ceramics and/or a natural stone and/or a living plant material.

5. Device according to claim 4, **characterized in that** the supply air flow (42) can be guided over the evaporation surface (11, 12, 13) of the evaporation apparatus (1) and/or
**in that** the supply air flow (42) can be guided through the evaporation surface (11, 12, 13) of the evaporation apparatus (1).

6. Device according to any one of claims 1 to 5, **characterized in that** the evaporation apparatus (1) does not contain any cooling apparatus for the liquid to be evaporated.

7. Device according to any one of claims 1 to 6, further containing at least one humidity sensor (26) by means of which the supply air flow (42) provided by the ventilation apparatus (2, 3) can be controlled in open-loop or closed-loop fashion.

8. Method for cooling a room (5) in which a liquid is evaporated by means of at least one evaporation apparatus (1) and released into the room (5), at least one ventilation apparatus (2, 3) containing a drying apparatus (23) being used to extract moisture from a fresh air flow (41) and this dehumidified fresh air flow (41) being released into the room (5) as a supply air flow (42), **characterized in that** the supply air flow (42) and the liquid only come into contact with one another inside the room (5).

9. Method according to claim 8, **characterized in that** the fresh air flow (41) is extracted from room air and/or outside air and/or in that the fresh air flow (41) is additionally heated.

10. Method according to any one of claims 8 or 9, **characterized in that** the relative humidity of the supply air flow (42) is about 2% to about 30% or about 5% to about 20% lower than the relative humidity of the fresh air flow (41).

11. Method according to any one of claims 8 to 10, **characterized in that** the liquid is applied to an evaporation surface (11, 12) and/or in that the liquid is applied to a moss surface (13) and/or to plants.

12. Method according to any one of claims 8 to 11, **characterized in that** the supply air flow (42) is guided over the evaporation surface (11, 12, 13) of the evaporation apparatus (1) and/or
**in that** the supply air flow is guided through the evaporation surface (11, 12, 13) of the evaporation apparatus (1).

13. Method according to any one of claims 8 to 12, **characterized in that** the liquid is evaporated at a temperature which differs from the room temperature by about -10 K to about +10 K or by about -5 K to about +5 K or by about -10 K to about +1 K or by about -8 K to about 0 K or by about -2 K to about +2 K.

14. Method according to any one of claims 8 to 13, **characterized in that** the supply air flow (42) which is supplied to the room (5) is controlled in an open-loop or closed-loop fashion on the basis of the measured values of a humidity sensor (26).

## Revendications

1. Dispositif (55) de refroidissement d'un espace (5), comprenant au moins un organe d'évaporation (1) conçu pour évaporer un liquide et pour le délivrer dans l'espace (5),
le dispositif comprenant en outre au moins un organe de ventilation (2, 3) muni d'un organe de séchage (23) et conçu pour extraire l'humidité d'un flux d'air frais (41) et pour délivrer ce flux d'air frais déshumidifié (41) sous forme de flux d'air d'alimentation (42) dans l'espace (5),
**caractérisé en ce que**, lors du fonctionnement du dispositif (55), le flux d'air d'alimentation (42) et le liquide n'entrent en contact l'un avec l'autre qu'à l'intérieur de l'espace (5).

2. Dispositif selon la revendication 1,
**caractérisé en ce que** l'organe de ventilation (2, 3) est conçu pour prélever le flux d'air frais (41) d'un air ambiant et/ou d'un air extérieur.

3. Dispositif selon la revendication 2,
**caractérisé en ce que** l'organe de séchage (23) est choisi parmi un séchoir à condensation et/ou un séchoir à adsorption.

4. Dispositif selon l'une des revendications 1 à 3,
**caractérisé en ce que** l'organe d'évaporation (1) présente une surface d'évaporation (11, 12, 13) sur laquelle le liquide peut être appliqué, et/ou en ce que l'organe d'évaporation (1) présente une surface d'évaporation (11, 12, 13) qui est choisie parmi un matériau poreux et/ou un verre et/ou une céramique et/ou une pierre naturelle et/ou un matériau végétal vivant.

5. Dispositif selon la revendication 4,
**caractérisé en ce que** le flux d'air d'alimentation (42) peut être guidé sur la surface d'évaporation (11, 12, 13) de l'organe d'évaporation (1), et/ou en ce que le flux d'air d'alimentation (42) peut être guidé à travers la surface d'évaporation (11, 12, 13) de l'organe d'évaporation (1).

6. Dispositif selon l'une des revendications 1 à 5,
**caractérisé en ce que** l'organe d'évaporation (1) ne comprend pas d'organe de refroidissement du liquide à évaporer.

7. Dispositif selon l'une des revendications 1 à 6,
comprenant en outre au moins un capteur d'humidité (26) permettant de commander ou de réguler le flux d'air d'alimentation (42) fourni par l'organe de ventilation (2, 3).

8. Procédé de refroidissement d'un espace (5), dans lequel
un liquide est évaporé au moyen d'au moins un organe d'évaporation (1) et est délivré dans l'espace (5),
l'humidité est extraite d'un flux d'air frais (41) au moyen d'au moins un organe de ventilation (2, 3) muni d'un organe de séchage (23), et ce flux d'air frais déshumidifié (41) est délivré sous forme de flux d'air d'alimentation (42) dans l'espace (5),
**caractérisé en ce que** le flux d'air d'alimentation (42) et le liquide n'entrent en contact l'un avec l'autre qu'à l'intérieur de l'espace (5).

9. Procédé selon la revendication 8,
**caractérisé en ce que** le flux d'air frais (41) est prélevé d'un air ambiant et/ou d'un air extérieur, et/ou
**en ce que** le flux d'air frais (41) est en outre chauffé.

10. Procédé selon l'une des revendications 8 ou 9,
**caractérisé en ce que** l'humidité relative du flux d'air d'alimentation (42) est inférieure à l'humidité relative du flux d'air frais (41) d'environ 2 % à environ 30 % ou d'environ 5 % à environ 20 %.

11. Procédé selon l'une des revendications 8 à 10,
**caractérisé en ce que** le liquide est appliqué sur une surface d'évaporation (11, 12), et/ou
**en ce que** le liquide est appliqué sur une surface de bryophyte (13) et/ou sur des plantes.

12. Procédé selon l'une des revendications 8 à 11,
**caractérisé en ce que** le flux d'air d'alimentation (42) est guidé sur la surface d'évaporation (11, 12, 13) de l'organe d'évaporation (1), et/ou
**en ce que** le flux d'air d'alimentation est guidé à travers la surface d'évaporation (11, 12, 13) de l'organe d'évaporation (1).

13. Procédé selon l'une des revendications 8 à 12,
**caractérisé en ce que** le liquide est évaporé à une température qui s'écarte de la température ambiante d'environ -10 K à environ +10 K ou d'environ -5 K à environ +5 K ou d'environ -10 K à environ +1 K ou d'environ -8 K à environ 0 K ou d'environ -2 K à environ +2 K.

14. Procédé selon l'une des revendications 8 à 13,
**caractérisé en ce que** le flux d'air d'alimentation (42) amené dans l'espace (5) est commandé ou régulé en fonction des valeurs de mesure d'un capteur d'humidité (26).
